# EUROPEAN PATENT SPECIFICATION

(11) **EP 2 424 738 B1**
(45) Date of publication and mention of the grant of the patent: **02.04.2014**
(21) Application number: 10714303.4
(22) Date of filing: 21.04.2010
(51) Int. Cl.: B60C 1/00, C08L 21/00, C08L 71/02, C08K 5/00, C08L 9/00

(54) **TIRE WITH CONTROLLED RESISTANCE TO THE FORMATION OF SURFACE DEFECTS**
REIFEN MIT GESTEUERTEM WIDERSTAND GEGEN DIE BILDUNG VON OBERFLÄCHENDEFEKTEN
PNEU AVEC RÉSISTANCE CONTRÔLÉE À LA FORMATION DE DÉFAUTS DE SURFACE

(30) Priority: 29.04.2009 IT MI20090728; 12.05.2009 US 177463 P
(43) Date of publication of application: 07.03.2012
(73) Proprietor: Pirelli Tyre S.p.A., 20126 Milano (IT)
(72) Inventor: BAIONE, Francesca, I-20126 Milan (IT); NAHMIAS NANNI, Marco, I-20126 Milan (IT); SALA, Fabrizia, I-20126 Milan (IT)
(74) Representative: Allaix, Roberto
(86) International application number: PCT/EP2010/055283
(87) International publication number: WO 2010/124977

(56) References cited:
- EP-A- 1 992 660
- EP-A2- 1 357 149
- JP-A- 5 179 067
- JP-A- 5 194 790
- US-A1- 2005 085 583
- Akrochem corporation: "Rubber chemicals competitive cross reference" Akrochem corporation 5 January 2009 (2009-01-05), XP002581955 Retrieved from the Internet: URL:http://www.akrochem.com/pdfs/ref.pdf> [retrieved on 2010-05-10]

## Description

The present invention relates to a tire with controlled resistance to the formation of surface defects.

More in particular, the present invention relates to a tire including a pair of sidewalls with controlled resistance to the formation of surface defects during the lifetime of the tire.

### BACKGROUND OF THE INVENTION

It is known that certain rubber compositions are very sensitive to the action of ozone. Vulcanized rubber compositions based on dienic elastomers are particularly sensitive.

When an article made with such a vulcanized elastomer composition is subjected to the action of prolonged static and dynamic stresses in the presence of ozone, some more or less marked cracks which can be seen on the surface of the article appear.

In order to minimize these effects of ozone, antioxidants, which are designed to slow down the formation and propagation of the cracks under static and dynamic stressing conditions, are commonly incorporated into these articles and, particularly, into the sidewalls based on elastomers that are included in tires. Waxes are also commonly used to provide additional static protection by forming a protective coating on the surface of the sidewalls.

The association of antioxidants and waxes has proven to be effective for the minimization of cracks at the surface of the sidewalls. In particular, waxes tend to quickly migrate on the surface of the sidewalls and to form a protective film, while antioxidants tend to slowly migrate so providing a long time protection.

Accordingly, the waxes provide a static protection during transportation and storage of tyres, while antioxidants provide a dynamic protection during use of the tyre mounted on a vehicle wheel, in particular against the fatigue resulting from the cyclic alternance of compression and release of the sidewalls during normal use. The static and dynamic protection can be evaluated and differentiated by subjecting a sample to static and dynamic ozone test, respectively.

As the antioxidant, an antioxidant containing N-(1,3-dimethylbutyl)-N'-phenyl-p-phenylenediamine (DMBPPD), N-phenyl-N'-isopropyl-p-phenylenediamine (IPPD), or N-(1,3-dimethylbutyl)-N'-phenyl-phenylenediamine (6PPD) is employed in general and, as the wax, a petroleum wax which contains a component having about 20 to 50 carbon atoms and has an average number of carbon atoms of 30 to 35 is employed in general.

Unfortunately, the migration of the antiozone compounds results in staining and coloring of the surfaces of the sidewalls.

More precisely, antioxidants can provide a color variation of the tyre sidewall so that yellowish or brown stains appear at the surface of the sidewalls, thereby causing deterioration of tyre appearance.

Moreover, the waxes used for improving ozone resistance bloom to form a film on the surface of the tyre sidewall. There is a problem, however, that the surface of the tyre sidewall can change its color to form white stains when the bloom is excessive.

The color variation and/or staining of the tyre sidewall is a major problem from the marketing point of view, because sidewall appearance (together with treadband design) is a major element conditioning the choice of any customer when buying new tyres.

The above mentioned problems have been faced separately in the art.

The color variation caused by wax has been faced, for example, in JP11-181150, JP2000/086824, and US 6,201,049, by attempting to find and select specific types of waxes.

Japanese Patent Application JP11-181150 discloses a rubber composition comprising from 1 to 2.5 phr of a saturated chain hydrocarbon wax comprising n-paraffins and iso-paraffins, the quantity of n-paraffins in the saturated chain hydrocarbon being from 75% to 85% by weight, the peak value of carbon atoms in the saturated chain being from 30 to 35, and the quantity of saturated chain hydrocarbon containing more than 45 carbon atoms being from 3% to 10% by weight.

Japanese Patent Application JP2000/086824 discloses a rubber composition comprising (A) 100 parts by weight of a rubber; (B) 0.5-10 parts by weight of a petroleum wax and (C) 1-10 parts by weight of an olefin resin. The petroleum wax (B) comprises (B1) a lower molecular weight fraction constituted by compounds having 24-29 carbon atoms and a branched hydrocarbon content from 10% to 15% by weight and (B2) a higher molecular weight fraction constituted by compounds having from 32 to 38 carbon atoms and a branched hydrocarbon content from 18% to 25% by weight.

US Patent No. 6,201,049 discloses a rubber composition for a tyre sidewall obtained by blending 0.5 to 2.5 parts by weight of a wax which contains a component having 45 or more carbon atoms and has an average number of carbon atoms of 28 to 38, and 3.0 to 7.0 parts by weight of an antioxidant containing 30% to 100% by weight of N-(1-methylheptyl)-N'-phenyl-p-phenylenediamine per 100 parts by weight of a rubber component comprising a diene rubber.

The color variation caused by antioxidants has been faced, for example, in JP05-179067, US 7,365,112 and US 6,598,632, by attempting to find and select additional compounds able to prevent such a color variation.

Japanese Patent Application JP05-179067 discloses a rubber composition for sidewall, made from natural rubber and/or synthetic diene rubber, compounded with an amine-based antioxidant, like 6PPD, and paraffin wax, wherein the rubber composition contains a polyethylene glycol with a molecular weight ranging from 570 to 1600 in an amount of from 0.5 to 5 phr.

US Patent No. 7,365,112 discloses a rubber composition comprising natural and/or synthetic diene rubbers, an amine antioxidant, like DMBPPD, and wax, which is compounded with a nonionic surfactant of a polyoxyethylene type having a HLB value of from 2 to 19.

Similarly, US Patent No. 6,598,632 discloses a rubber composition for tire sidewalls, the rubber composition comprising a blend of natural and butadiene rubber compounded with an amine antioxidant, like DMBPPD, an antiozone wax, and a nonionic surfactant of a polyoxyethylene type in an amount of from 0.5 to 10 phr.

WO 2006/114124 discloses a rubber composition for tire sidewalls comprising a blend of a polyisoprene rubber and a diene elastomeric polymer and an amount of from 0.2 phr to 10 phr of a copolymer of an ethylenically unsaturated carboxylic acid with at least one ethylenically unsaturated monomer containing at least one polyoxyalkylene side chain.

EP 0779330 discloses a rubber composition intended for the manufacturing of a tire tread comprising 60 phr of styrenebutadiene rubber, 40 phr of natural rubber, 1 phr of an antiozoning agent and 5 or 10 phr of a polyethylene oxide having a molecular weight ranging from 50,000 to 1,000,000 daltons, a Tg of -67°C and a melting temperature of +66°C.

EP 1992660 discloses a rubber composition intended for the manufacturing of a carcass ply and/or a belt comprising 80 phr of natural rubber, 20 phr of epoxidized natural rubber, 10 phr of a polyethylene glycol having an average molecular weight of about 4,000, 1 phr of a first antioxidant (2,2,4-trimethyl-1,2-dihydroquinoline polymer) and 1 phr of a second antioxidant (N-(1,3-dimethylbutyl)-N'-phenyl-p-phenylenediamine).

US 2005/085583 discloses a rubber composition intended for the manufacturing of a tire tread comprising 100 phr of natural rubber, 3 phr of a polyethylene glycol having an average molecular weight of from 3,000 to 3,700 dalton, 2 phr of an antioxidant (paraphenylene diamine) and 1.50 phr of wax.

The use of the copolymer is believed to provide to the crosslinked rubber composition (i) improved mechanical properties, in particular in terms of dynamic elastic modulus and good fatigue resistance, and (ii) improved ozone resistance which allows to reduce the amount of other antiozonants and/or waxes.

### SUMMARY OF THE INVENTION

The Applicant has faced the problem of overcoming the above mentioned drawbacks caused by antioxidants and waxes.

The Applicant has found that the above mentioned approaches are not able to overcome the above mentioned drawbacks.

More in particular, the Applicant has found that stains (either yellowish or brown or white) still appear on the surface of the sidewalls either quickly after the vulcanization or during the whole lifetime of the tyre.

Further, the Applicant has perceived that the approach of WO 2006/114124, although giving satisfactory results, requires the use of a very expensive and complex copolymer as antiozonant.

After extensive investigation, the Applicant has now surprisingly found that it is possible to overcome the above mentioned drawbacks by introducing into an elastomeric composition for the tire sidewalls an ozone protecting system substantially consisting of an amount of at least 3 phr of a polyethylene glycol, preferably having an average molecular weight of from 1,000 to 4,000, and an amount of at most 3 phr of an antioxidant system which consists of at least one antioxidant selected from the group consisting of phenylenediamine and its derivatives, diphenylamine and its derivatives, dihydroquinoline and its derivatives, phenol and its derivatives, benzimidazole and its derivatives, hydroquinone and its derivatives, and combinations thereof. The elastomeric composition is substantially free of wax and other antiozonants and/or in general antioxidants other than those of the above mentioned antioxidant system.

For the purpose of the present invention and the claims which follow, the wording "substantially free of wax" or "to substantially avoid the use of wax" means an amount of wax lower than 0.5 phr.

For the purpose of the present invention and the claims which follow, with the wording "ozone protecting system substantially consisting of an amount of at least 3 phr of a polyethylene glycol and an amount of at most 3 phr of an antioxidant system which consists of at least one antioxidant selected from the group consisting of: phenylenediamine and its derivatives, diphenylamine and its derivatives, dihydroquinoline and its derivatives, phenol and its derivatives, benzimidazole and its derivatives, hydroquinone and its derivatives, and combinations thereof" means that said ozone protecting system substantially consists of the polyethylene glycol and the abovementioned antioxidant system, in the abovementioned amounts, except with the presence of at most 0.1 phr of other antiozonants and/or in general antioxidants. According to a preferred embodiment, the elastomeric composition comprises an amount of wax lower than 0.2 phr, and more preferably lower than 0.1 phr.

The Applicant has found that said polyethylene glycol improves the ozone resistance of said crosslinked elastomeric compositions. As a matter of fact, the use of said polyethylene glycol allows to substantially avoid the use of wax and other antiozonants which are regularly and usually employed to provide static ozone protection and to reduce the use of antioxidants which are designed to slow down the formation and propagation of cracks under static and dynamic stressing conditions in the presence of ozone. Advantageously, the reduction of the amount of antioxidants means a reduction of polluting and potentially dangeraus compounds.

The Applicant has also found that the use of said ozone protecting system allows to avoid the staining and colour variation problems which normally occur, in particular in tire's sidewalls, when the above antiozonants and waxes are used.

Advantageously, the ozone protecting system of the invention allows to maintain unaltered or even to slightly improve the mechanical characteristics of the sidewalls of a tyre.

Last but not least, the ozone protecting system used in the present invention is a simple and economically convenient solution to the above mentioned staining and colour variation problems.

According to a first aspect, the present invention refers to a tyre for vehicle wheels comprising at least one outer structural element comprising a crosslinked elastomeric material obtained by crosslinking a crosslinkable elastomeric composition,
wherein said crosslinkable elastomeric composition is substantially free of wax, and comprises:
(a) 100 phr of at least one diene elastomeric polymer; and
(b) an ozone protecting system substantially consisting of:
   (i) at least 3.0 phr, preferably from 3.5 to 6.5 phr, of a polyethylene glycol; and
   (ii) at most 3.0 phr, preferably from 2.5 to 0.5 phr, of an antioxidant system which consists of at least one antioxidant selected from the group consisting of phenylenediamine and its derivatives, diphenylamine and its derivatives, dihydroquinoline and its derivatives, phenol and its derivatives, benzimidazole and its derivatives, hydroquinone and its derivatives, and combinations thereof,
   and wherein said outer structural element is a sidewall.

According to one preferred embodiment, the tire comprises: a carcass structure of a substantially toroidal shape, having opposite lateral edges associated with respective right-hand and left-hand bead structures, said bead structures comprising at least one bead core and at least one bead filler; a belt structure applied in a radially external position with respect to said carcass structure; a tread band radially superimposed on said belt structure; a pair of sidewalls applied laterally on opposite sides with respect to said carcass structure.

Preferably, said outer structural element has a tensile modulus at 300% elongation (300% Modulus) not higher than 12 MPa, preferably of from 5 MPa to 9 MPa.

Preferably, said outer structural element has a IRHD hardness, measured at 23°C not lower than 20, more preferably of from 50 to 70.

The tensile modulus may be measured according to Standard ISO 37:2005. The IRHD hardness may be measured according to Standard ISO 48:2007. Further details regarding the above measurement methods will be given in the examples which follow.

According to one preferred embodiment, the elastomeric composition used in the present invention comprises:
(a₁) at least one polyisoprene rubber in an amount higher than or equal to 20 phr, preferably of from 30 phr to 90 phr, and
(a₂) at least one diene elastomeric polymer other than the polyisoprene rubber (a₁) in an amount lower than or equal to 80 phr, preferably of from 10 phr to 70 phr.

According to one preferred embodiment, the polyisoprene rubber (a₁) may be selected from natural or synthetic polyisoprene rubber, preferably from natural or synthetic cis-1,4-polyisoprene rubber, synthetic 3,4-polyisoprene rubber, more preferably from natural cis-1,4-polyisoprene rubber (natural rubber). Preferably, said natural rubber is present in the crosslinkable elastomeric composition above reported in an amount of from 30 phr to 60 phr, more preferably of from 30 phr to 50 phr.

According to one preferred embodiment, the diene elastomeric polymer (a₂) other than the polyisoprene rubber (a₁) may be selected from those commonly used in sulfur-crosslinkable elastomeric compositions, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-Butadiene is particularly preferred.

Monovinylarenes which may optionally be used as comonomers generally contain from 8 to 20, preferably from 8 to 12 carbon atoms, and may be selected, for example, from: stirene; 1-vinylnaphthalene; 2-vinylnaphthalene: various alkyl, cycloalkyl, aryl, alkylaryl or arylalkyl derivatives of stirene such as, for example, α-methylstirene, 3-methylstirene, 4-propylstirene, 4-cyclohexylstirene, 4-dodecylstirene, 2-ethyl-4-benzylstirene, 4-p-tolylstirene, 4-(4-phenylbutyl)stirene, or mixtures thereof. Stirene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a₂) may be selected, for example, from: polybutadiene (in particular, polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof. Polybutadiene (in particular, polybutadiene with a high 1,4-cis content, usually higher than 90%, and a low vinyl content, usually lower than 5%), or mixtures thereof, are particularly preferred. Preferably, said polybutadiene is present in the crosslinkable elastomeric composition above reported in an amount of from 40 phr to 70 phr, more preferably of from 50 phr to 70 phr.

The above reported crosslinkable elastomeric composition may optionally comprise at least one elastomeric polymer of one or more monoolefns with an olefinic comonomer or derivatives thereof. The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

The above reported crosslinkable elastomeric composition may optionally comprise at least one polyisoprene rubber (a₁) and/or at least one diene elastomeric polymer (a₂) which are functionalized by reaction with suitable terminating agents or coupling agents. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 and US 4,550,142).

According to one preferred embodiment, said polyethylene glycol is present in the crosslinkable elastomeric composition in an amount of from 3.5 phr to 6.5 phr, more preferably of from 4.0 phr to 6.0 phr.

According to one preferred embodiment, said polyethylene glycol has an average molecular weight of from 1,000 to 4,000, more preferably from 1,000 to 2,500, and most preferably from 1,500 to 2,000. The polyethylene glycols useful in the present invention are solid at room temperature with a clear melting point ranging from 40° to 60°C.

Polyethylene glycol which may be used in the present invention and which are currently commercially available are the products Polidac™ from Sasol, and Pluriol™ from BASF. Useful commercial products are Pluriol™ E 1500 and Pluriol™ E 3400.

According to a preferred embodiment, the antioxidant system consists of at least one first antioxidant selected from the group consisting of phenylenediamine and its derivatives and at least one second antioxidant selected from the group consisting of diphenylamine and its derivatives, dihydroquinoline and its derivatives, phenol and its derivatives, benzimidazole and its derivatives, and hydroquinone and its derivatives.

According to a preferred embodiment, the amount of said second antioxidant in the crosslinkable elastomeric composition is at most 1.0 phr, more preferably at most 0.5 phr.

According to one preferred embodiment, said phenylenediamine derivatives may be selected, for example, from N-phenyl-N'-iso-propyl-p-phenylenediamine (IPPD), N-(1,3-dimethylbutyl)-N'-phenyl-p-phenylenediamine (6PPD), N,N'-bis-(1,4-dimethylpentyl)-p-phenylenediamine (77PD), N,N'-bis-(1-ethyl-3-methylpentyl)-p-phenylenediamine (DOPD), N,N'-diphenyl-p-phenylenediamine (DPPD), N,N'-ditolyl-p-phenylenediamine (DTPD), N,N'-di-β-naphthyl-p-phenylenediamine (DNPD), N,N'-bis-(1-methylheptyl)-p-phenylenediamine, N,N'-di-sec-butyl-p-phenylenediamine (44PD), N-phenyl-N'-cicloesyl-p-phenylenediamine, or N-phenyl-N'-1-methylheptyl-p-phenylenediamine. N-(1,3-dimethylbutyl)-N'-phenyl-p-phenylenediamine (6PPD) and N,N'-ditolyl-p-phenylenediamine (DTPD) are particularly preferred.

According to one preferred embodiment, said diphenylamine derivatives may be selected, for example, from octylated diphenylamine (ODPA) and styrenated diphenylamine (SDPA).

According to one preferred embodiment, said dihydroquinoline derivatives may be selected, for example, from 6-ethoxy-2,2,4-trimethyl-1,2-dihydroquinoline (ETMQ) and 2,2,4-trimethyl-1,2-dihydroquinoline, polimerized (TMQ). 2,2,4-trimethyl-1,2-dihydroquinoline, polymerized (TMQ) is particularly preferred.

According to one preferred embodiment, said phenol derivatives may be selected, for example, from 2,6-di-t-butyl-hydroxytoluene (BHT), 2,6-di-t-butyl-4-nonylphenol, 2,6-di-t-butyl-4-ethylphenol, 4-nonylphenol, 3-(2,3-di-t-butyl-4-hydroxyphenyl) propionic methyl ester, and 3,5-di-t-butyl-4-hydroxyhydrocinnamic acid octadedecyl ester. 2,6-di-t-butyl-hydroxytoluene (BHT) is particularly preferred.

According to one preferred embodiment, said benzimidazole derivatives may be selected, for example, from 2-mercaptobenzimidazole (MBI), zinc-2-mercaptobenzimidazole (ZMBI), methyl-2-mercaptobenzimidazole (MMBI), and zinc-2-methylmercaptobenzimidazole (ZMMBI).

According to one preferred embodiment, said hydroquinone derivatives may be selected, for example, from 2,5-di-t-butyl hydroquinone (TBHQ), 2,5-di(tert-amyl)hydroquinone (TAHQ), hydroquinone (HQ), p-methoxy-phenol, and toluhydroquinone (THQ).

According to one preferred embodiment, said antioxidant system is present in the crosslinkable elastomeric composition in an amount of from 0.5 to 2.5 phr, more preferably of from 1.5 to 2.5 phr.

At least one reinforcing filler may advantageously be added to the above reported crosslinkable elastomeric composition, in an amount generally of from 0 phr to 120 phr, preferably of from 20 phr to 90 phr. The reinforcing filler may be selected from those commonly used for crosslinked manufactured articles, in particular for tires, such as, for example, carbon black, silica, alumina, aluminosilicates, calcium carbonate, kaolin, or mixtures thereof. Carbon black, silica and mixture thereof are particularly preferred.

According to one preferred embodiment, said carbon black reinforcing filler may be selected from those having a surface area of not less than 20 m²/g (determined by STSA - Statistical Thickness Surface Area - according to ISO 18852:2005).

The silica which may be used in the present invention may generally be a pyrogenic silica or, preferably, a precipitated silica, with a BET surface area (measured according to ISO standard 5794/1) of from 50 m²/g to 500 m²/g, preferably of from 70 m²/g to 200 m²/g.

When a reinforcing filler comprising silica is present, the crosslinkable elastomeric composition may advantageously incorporate a silane coupling agent capable of interacting with the silica and of linking it to the elastomeric polymer during the vulcanization.

Coupling agents that are preferably used are those based on silane which may be identified, for example, by the following structural formula (VI):

(R₂)₃Si-CₜH₂ₜX (VI)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer between 1 and 6 inclusive; X is a group selected from: nitroso, mercapto, amino, epoxide, vinyl, imide, chloro, -(S)ᵤCₜ(H₂ₜSi-(R₂)₃ or or -S-COR₂ in which u and t are integers of from 1 to 6 extremes included and the groups R₂ are defined as reported above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the crosslinkable elastomeric composition.

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with vulcanisation activators, accelerators, and retardants known to those skilled in the art.

Vulcanisation activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof. Stearic acid is typically used as activator with zinc oxide.

Said vulcanization activators are preferably employed in the crosslinkable elastomeric composition in an amount of from 0.5 phr to 10 phr, more preferably of from 1 phr to 5 phr, and even more preferably of from 1.5 phr to 3.5 phr.

Vulcanisation accelerators that are commonly used may be selected from: dithiocarbamates, guanidines, thioureas, thiazoles, sulphenamides, thiurams, amines, xanthates, or mixtures thereof.

Said vulcanization accelerators are preferably employed in the crosslinkable elastomeric composition in an amount of from 0.05 phr to 10 phr, more preferably from 0.1 phr to 5 phr, and even more preferably from 0.5 phr to 3 phr.

Vulcanization retardants that are commonly used may be selected, for example, from: urea, N-cyclohexyl-2-benzothiazolyl sulfenamide, N-cycloesil-phtalimide, N-cyclohexylthiophthalimides, N-Nitrosodiphenylamine, or mixtures thereof.

Said vulcanization retardants are preferably employed in the crosslinkable elastomeric composition in an amount of from 0.001 phr to 1 phr, more preferably from 0.005 phr to 0.5 phr, and even more preferably from 0.1 phr to 0.3 phr.

Said crosslinkable elastomeric composition may comprise other commonly used additives selected on the basis of the specific application for which the composition is intended.

For the purpose of further improving the processability, a plasticizer generally selected from mineral oils, vegetable oils, synthetic oils, or mixtures thereof, such as, for example, paraffin oils, aromatic oils, naphthenic oils, phthalates, or mixtures thereof, may be added to said crosslinkable elastomeric composition. The amount of plasticizer generally ranges of from 0 phr to 70 phr, preferably of from of 5 phr to 30 phr.

The above reported crosslinkable elastomeric composition may be prepared by mixing together the elastomeric base components (a) together with the above mentioned ozone protecting system (b), and with the other additives optionally present, according to techniques known in the art. The mixing steps may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

### BRIEF DESCRIPTION OF THE DRAWINGS

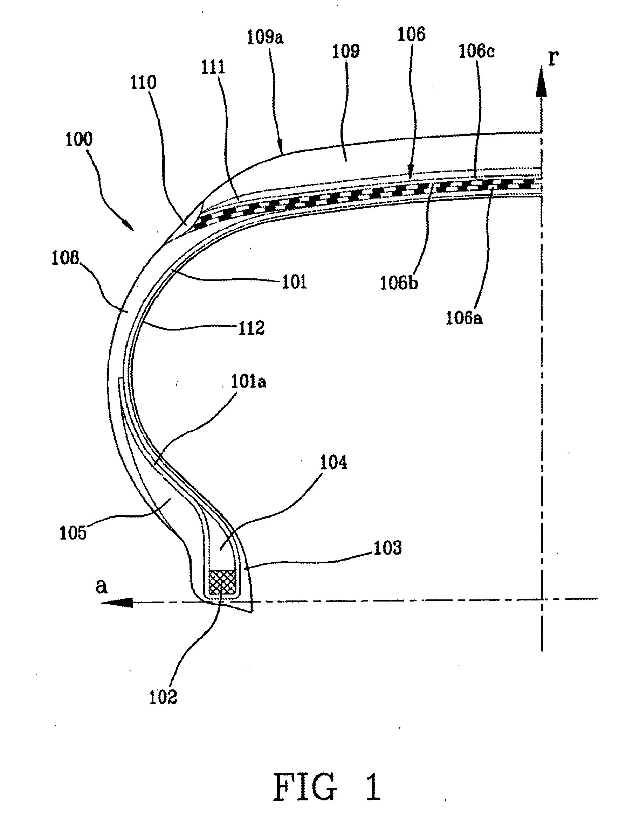

Fig. 1 is a view in cross-section of a portion of a tyre made according to one embodiment of the present invention.

### DETAILED DESCRIPTION OF THE PREFERRED EMBODIMENTS

The present invention will be illustrated in further detail by means of an illustrative embodiment, with reference to the attached Fig. 1 which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead structures comprising at least one bead core (102) and at least one bead filler (104). The association between the carcass ply (101) and the bead core (102) is achieved here by turning up the opposite lateral edges of the carcass ply (101) around the bead core (102) so as to form the so-called carcass turn-up (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702).

The carcass ply (101) usually comprises a plurality of reinforcing cords arranged parallel to each other and at least partially coated with a layer of a crosslinked elastomeric material. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys).

The carcass ply (101) is usually of radial type, i.e., it incorporates reinforcing cords arranged in a substantially perpendicular direction relative to a circumferential direction.

The bead core (102) is enclosed in a bead structure (103), defined along an inner circumferential edge of the tyre (100), with which the tyre engages on a rim (not represented in Fig. 1) forming part of a vehicle wheel. The space defined by each carcass turn-up (101a) contains a bead filler (104).

An antiabrasive layer (105) is usually placed in an axially external position relative to the carcass turn-up (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) at least one 0-degree reinforcing layer (106c) may optionally be applied, commonly known as a "0" belt", which generally incorporates a plurality of reinforcing cords, typically textile cords, arranged at an angle of a few degrees, typically in a range of from 0 to 5 degrees relative to a circumferential direction, usually coated with a crosslinked elastomeric composition.

A sidewall (108) obtained by crosslinking the crosslinkable elastomeric composition described above is applied externally onto the carcass ply (101), this sidewall extending, in an axially outer position, from the bead (103) to the end of the belt structure (106).

A tread band (109), whose lateral edges are connected to the sidewalls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall insert, not shown, may be placed in a position axially internal with respect to the sidewall (108) and radially extending for a length between the bead (103) and the lateral edge of the tread band (109). Said sidewall insert is usually employed in the case of extended mobility tires such as, for example, run flat tires.

A tread underlayer (111) may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip (110) made of elastomeric material, commonly known as a "mini-sidewall", may optionally be present in the connecting zone between the sidewalls (108) and the tread band (109), this mini-sidewall generally being obtained by coextrusion with the tread band and allowing an improvement in the mechanical interaction between the tread band (109) and the sidewalls (108). Alternatively, the end portion of the sidewall (108) directly covers the lateral edge of the tread band (109).

In the case of tubeless tires, a first layer (112), generally known as a "liner", which provides the necessary impermeability to the inflation air of the tire, may also be provided in an inner position relative to the carcass ply (101).

Moreover, a second layer (not shown in Fig. 1) generally known as a "under-liner, may be placed between the liner (112) and the carcass ply (101).

The finished tyre shown in figure 1 can be produced according to methods and using apparatus that are known in the art, as described, for example, in European Patent EP 199,064, or in United States Patents US 4,872,822 and US 4,768,937. Typically, said process includes manufacturing a raw (or green) tyre by assembling the various structural elements above described on one or more supports (e.g. one or more drums), and subsequently moulding and vulcanizing the raw tire.

The present invention will be further illustrated below by means of a number of preparation examples, which are given for purely indicative purposes and without any limitation of this invention.

The samples of the following examples were evaluated according to the following tests and measurements.

The Mooney viscosity ML(1+4) at 100°C was measured according to Standard ISO 289-1:2005, on the non-crosslinked elastomeric compositions obtained as described below.

The tensile modulus (100% Modulus and 300% Modulus), the stress at break, and the elongation at break were measured according to Standard ISO 37:2005, on samples of the elastomeric compositions described below crosslinked at 170°C, for 10 min.

The hardness in IRHD degrees (at 23°C) according to Standard ISO 48:2007 was measured on samples of the elastomeric compositions vulcanized at 170°C, for 10 min.

The static ozone test was conducted as described below. Test pieces of the crosslinked elastomeric compositions described below (vulcanized at 170°C for 10 min) having a sand-glass shape with the longer sides having a concave profile and having dimensions 90 mm x 180 mm x 3 mm were obtained and subjected to traction up to 40% strain. Then, the test pieces under the above traction were fixed to plates with an adhesive in order to maintain said traction. The plates so obtained were placed in a test chamber apparatus Mod. 703, made by Hampden, in order to evaluate the degradation by ozone operating at the following conditions:
- ozone concentration: 50 ± 5 pphm (parts per hundred millions);
- temperature: 50 ± 2°C;
- exposure time: 70 hours.

After 70 hours at the conditions reported above, the test pieces were examined visually in order to determine the presence of cracks. A test piece not showing cracks was given score 40 (resistance to the highest strain), a test piece showing cracks on the whole surface was given score 0 (resistence to the lowest strain), while intermediate scores were proportional to the surface showing cracks (resistance to intermediate strain).

The test pieces were further visually inspected to verify the presence of stains. A subjective average qualitative score was given to the surface appearance of each test piece as summarized below.

**Appearance**

| Score | |
|---|---|
| A | Not stained |
| B | Slightly stained |
| C | Stained |
| D | Not stained, slightly oily |

The dynamic ozone test was carried out as follows. Test pieces of the crosslinked elastomeric compositions described below (vulcanized at 170°C for 10 min) having dimensions 30 mm x 8 mm x 1 mm were positioned inside a bell-glass wherein a ozonized air [ozone concentration equal to 10 ± 2 pphm (parts per hundred millions)] was conveyed and were dynamically continuously subjected to traction from 0% to 30% of strain. The test was carried out at ambient temperature (23 ± 1°C).

Starting from the first hour, and then after every 2 hours (for a total time of 17 hours) at the conditions reported above, the test pieces were examined at the optical microscope (40X) in order to determine the presence of cracks.

The results of said test were expressed by means of an evaluation scale which runs from 0 to 5, wherein 0 means no cracks visible with the optical microscope (40X) and 5 means cracks visible with the optical microscope (40X) and with the naked eye.

The tyre fatigue test was carried out as follows. The sample tyres (205/55 R16) were mounted on a 6.50" - 16" wheel rim and inflated at a pressure of 2.2 bar. The tyres were subjected to a load able to deform and press the tyre of 23 mm under rest conditions. Successively the tyres were rotated on a road wheel at a fixed and controlled speed of 60 km/h for 1,000 hours. At the end of the test, the sample tyres were visually evaluated for determining the presence of cracks and/or stains.

### EXAMPLES

The elastomeric compositions R (reference) and 1 to 7 comprising different amounts of 6PPD, wax and/or different amounts and kinds of polyethylene glycol given in Table 1 were prepared as follows (the amounts of the various components are given in phr).

All the components, except sulfur, retardant (CTP) and accelerator (CBS), were mixed together in an internal mixer (model Pomini PL 1.6) for about 5 min (1^{st} Step). As soon as the temperature reached 145±5°C, the elastomeric composition was discharged. The sulfur, retardant (PVI) and accelerator (CBS), were then added and mixing was carried out in an open roll mixer (2^{nd} Step).

**TABLE 1**

| Sample | R | 1 (c) | 2 (c) | 3 (i) | 4 (i) | 5 (i) | 6 (i) | 7 (i) |
|---|---|---|---|---|---|---|---|---|
| | First step | | | | | | | |
| NR | 40 | 40 | 40 | 40 | 40 | 40 | 40 | 40 |
| BR | 60 | 60 | 60 | 60 | 60 | 60 | 60 | 60 |
| N330 | 55 | 55 | 55 | 55 | 55 | 55 | 55 | 55 |
| 6PPD | 3 | 3 | 3 | 2 | 2 | 2 | 2 | 2 |
| WAX | - | 1.5 | 1.5 | - | - | - | - | - |
| PEG 1000 | - | - | - | - | - | 3 | 5 | - |
| PEG 1500 | - | - | 2 | 3 | 5 | - | - | - |
| PEG 3400 | - | - | - | - | - | - | - | 5 |
| Oil | 15 | 15 | 15 | 15 | 15 | 15 | 15 | 15 |
| Stearic acid | 2 | 2 | 2 | 2 | 2 | 2 | 2 | 2 |
| Zinc oxide | 3 | 3 | 3 | 3 | 3 | 3 | 3 | 3 |

| | Second step | | | | | | | |
|---|---|---|---|---|---|---|---|---|
| Sulphur | 1.8 | 1.8 | 1.8 | 1.8 | 1.8 | 1.8 | 1.8 | 1.8 |
| CBS | 0.7 | 0.7 | 0.7 | 0.7 | 0.7 | 0.7 | 0.7 | 0.7 |
| CTP | 0.1 | 0.1 | 0.1 | 0.1 | 0.1 | 0.1 | 0.1 | 0.1 |

| | | | | | | | | |
|---|---|---|---|---|---|---|---|---|
| NR: natural rubber; BR: cis-1,4-polybutadiene rubber (Europrene^{®} Neocis BR40 - Polimeri Europa); N330: carbon black; 6PPD: N-(1,3-dimethylbutyl)-N'-phenyl-p-phenylenediamine antioxidant; PEG 1000: polyethylene glycol having average molecular weight of about 1000 (Pluriol E 1000, BASF Corp.) PEG 1500: polyethylene glycol having average molecular weight of about 1500 (Pluriol E 1500, BASF Corp.) PEG 3400: polyethylene glycol having average molecular weight of about 3400 (Pluriol E 3400, BASF Corp.) CBS: N-cyclohexyl-2-benzothiazylsulphenamide accelerator (Lanxess); CTP: N-cyclohexylthiophthalimide retardant (Vulkalent® G Lanxess) | | | | | | | | |

All the samples were evaluated as described above and the results were summarized in the following Table 2.

**TABLE 2**

| Example | R | 1 (c) | 2 (c) | 3 (i) | 4 (i) | 5 (i) | 6 (i) | 7 (i) |
|---|---|---|---|---|---|---|---|---|
| | Green Properties | | | | | | | |
| Monev ML (1+4) 100°C | 57 | 56 | 56 | 60 | 58 | 59 | 57 | 60 |

| | Static Mechanical Properties | | | | | | | |
|---|---|---|---|---|---|---|---|---|
| 100% Modulus (Mpa) | 1.42 | 1.40 | 1.55 | 1.65 | 1.6 | 1.62 | 1.57 | 1.63 |
| 300% Modulus (Mpa) | 6.3 | 5.9 | 7.1 | 7.3 | 7.2 | 7.1 | 6.8 | 7.4 |
| Stress at break (Mpa) | 14.5 | 14.9 | 14.5 | 14.2 | 14.3 | 14.3 | 14.5 | 14.7 |
| Elongation at break (%) | 580 | 600 | 570 | 540 | 550 | 550 | 560 | 570 |
| Hardness IRHD (23°C) | 55.5 | 55.5 | 55.5 | 56 | 55.5 | 55.3 | 55.3 | 56.0 |

| | Static Ozone Test | | | | | | | |
|---|---|---|---|---|---|---|---|---|
| Threshold strain score | 5 | 40 | 40 | 27 | 40 | 40 | 40 | 25 |
| Appearance | A | C | C | B | A | D | D | B |

| | Dynamic Ozone Test | | | | | | | |
|---|---|---|---|---|---|---|---|---|
| Crack at 1 hour | 0 | 0 | 0 | 0 | 0 | 0 | 0 | 0 |
| Crack at 3 hour | 0 | 0 | 0 | 0 | 0 | 0 | 0 | 0 |
| Crack at 5 hour | 0 | 0 | 0 | 0 | 0 | 0 | 0 | 0 |
| Crack at 7 hour | 0 | 0 | 0 | 0 | 0 | 0 | 0 | 0 |
| Crack at 9 hour | 0 | 0 | 0 | 0 | 0 | 0 | 0 | 0 |
| Crack at 11 hour | 0 | 0 | 0 | 0 | 0 | 0 | 0 | 0 |
| Crack at 13 hour | 0 | 0 | 0 | 0 | 0 | 0 | 0 | 0 |
| Crack at 15 hour | 0 | 0 | 0 | 0 | 0 | 0 | 0 | 0 |
| Crack at 17 hour | 1 | 1 | 1 | 1 | 1 | 1 | 1 | 1 |

| | Fatigue test | | | | | | | |
|---|---|---|---|---|---|---|---|---|
| Stains | Yes | Yes | - | - | No | - | - | - |
| Cracks | Yes | No | - | - | No | - | - | - |

The samples of the invention showed an increase of 100% and 300% tensile modulus with respect to reference sample R and comparison samples 1 an 2. By comparing samples 4, 6, and 7, the data showed that the higher the average molecular weight of the polyethylene glycol, the higher the tensile modulus. On the contrary, by comparing samples 3 and 5 with 4 and 6, the data showed that by increasing the amount of the polyethylene glycol, the tensile modulus slightly decreased, possibly due to a plastifying effect.

Reference sample R which contained neither wax nor PEG showed a good appearance after the static ozone test, but a very low threshold strain score. Comparison samples 1 and 2, which contained wax, even if showed the highest threshold strain score, showed a very bad appearance after the static ozone test with several stains on the sidewall surface, and showed formation of stains and cracks during the fatigue test, simulating the whole duration of a tyre under normal use. It is believed that the formation of stains in sample 2 containing both wax and polyethylene glycol may be due to a competition between the two components.

The dynamic ozone test showed that the samples 3-7 of the present invention, in spite of containing a reduced amount of 6PPD (the antiozonant component of the ozone protecting system particularly involved in the dynamic ozone protection, i.e., during normal use of a tyre), provided the same required protection level of reference sample R and comparison samples 1 and 2 (only 1 crack after 17 hours).

Invention samples 3 to 7 showed a substantial improvement both in terms of stains and cracks. Samples 4 to 6 were stain-free and samples 3 and 7 were only slightly stained. Samples 5 and 6 shown a slightly oily surface, yet visually acceptable.

The best results were obtained with sample 4 comprising an amount of 5 phr of PEG 1500.

A tyre according to the invention, wherein the sidewalls were manufactured by employing the elastomeric composition according to sample 4, was manufactured and submitted to fatigue test together with comparison tyres similarly prepared by employing the elastomeric composition according to the reference sample R and the elastomeric composition according to sample 1.

No stain and crack was observed at the end of the fatigue test for the tyre comprising the elastomeric composition according to sample 4. On the contrary, the tyres comprising the elastomeric compositions according to sample R and 1 showed several stains (due to the migration on the surface of 6PPD).

Moreover, the tyres comprising the elastomeric composition according to sample R also showed several cracks (due to the absence of the ozone protection system).

## Claims

1. A tyre for vehicle wheels comprising at least one outer structural element including a crosslinked elastomeric material obtained by crosslinking a crosslinkable elastomeric composition, wherein said crosslinkable elastomeric composition comprises: no wax or an amount of wax lower than 0.5 phr,
(a) 100 phr of at least one diene elastomeric polymer;
(b) an ozone protecting system substantially consisting of:
(i) at least 3.0 phr, of a polyethylene glycol; and
(ii) at most 3.0 phr of an antioxidant system which consists of at least one antioxidant selected from the group consisting of phenylenediamine and its derivatives, diphenylamine and its derivatives, dihydroquinoline and its derivatives, phenol and its derivatives, benzimidazole and its derivatives, hydroquinone and its derivatives, and combinations thereof,
and wherein said at least one outer structural element is a sidewall.

2. The tyre according to claim 1, wherein said elastomeric composition comprises an amount of from 3.5 phr to 6.5 phr of said polyethylene glycol.

3. The tyre according to any one of preceding claims, wherein said polyethylene glycol has an average molecular weight of from 1,000 to 4,000.

4. The tyre according to claim 3, wherein said polyethylene glycol has an average molecular weight of from 1,000 to 2,500.

5. The tyre according to any one of preceding claims, wherein said antioxidant system consists of at least one first antioxidant selected from the group consisting of phenylenediamine and its derivatives and at least one second antioxidant selected from the group consisting of diphenylamine and its derivatives, dihydroquinoline and its derivatives, phenol and its derivatives, benzimidazole and its derivatives, and hydroquinone and its derivatives.

6. The tyre according to claim 5, wherein the amount of said second antioxidant is at most 1.0 phr.

7. The tyre according to any one of preceding claims, wherein said elastomeric composition comprises an amount of from 0.5 to 2.5 phr of said antioxidant system.

8. The tyre according to any one of preceding claims, wherein said phenylenediamine derivative is selected from the group consisting of N-(1,3-dimethylbutyl)-N'-phenyl-p-phenylenediamine (6PPD) and N,N'-ditolyl-p-phenylenediamine (DTPD).

9. The tyre according to any one of preceding claims, wherein said dihydroquinoline derivative is 2,2,4-trimethyl-1,2-dihydroquinoline, polymerized (TMQ).

10. The tyre according to any one of preceding claims, wherein said phenol derivative is 2,6-di-t-butyl-hydroxytoluene (BHT).

11. The tyre according to any one of preceding claims, wherein said elastomeric composition comprises (a₁) at least one polyisoprene rubber in an amount higher than or equal to 20 phr, and (a₂) at least one diene elastomeric polymer other than the polyisoprene rubber (a₁) in an amount lower than or equal to 80 phr.

12. The tyre according to any one of preceding claims, wherein said at least one polyisoprene rubber (a₁) is selected from the group consisting of natural and synthetic polyisoprene rubber.

13. The tyre according to claim 12, wherein said at least one polyisoprene rubber (a₁) is selected from the group consisting of natural cis-1,4-polyisoprene rubbers and mixtures thereof.

14. The tyre according to any one of preceding claims, wherein said at least one diene elastomeric polymer (a₂) is selected from the group consisting of polybutadiene, optionally halogenated isoprene/isobutene copolymers, 1,3-butadiene/acrylonitrile copolymers, styrene/1,3-butadiene copolymers, stirene/isoprene/1,3-butadiene copolymers, styrene/1,3-butadiene/acrylonitrile copolymers, and mixtures thereof.

15. The tyre according to claim 14, wherein said at least one diene elastomeric polymer (a₂) is selected from the group consisting of polybutadienes with 1,4-cis content higher than 90% and vinyl content lower than 5% and mixtures thereof.

## Patentansprüche

1. Reifen für Fahrzeugräder, umfassend zumindest ein äußeres Strukturelement mit einem vernetzten Elastomermaterial, das durch Vernetzen einer vernetzbaren Elastomerzusammensetzung erzielt ist, wobei die vernetzbare Elastomerzusammensetzung Folgendes umfasst: kein Wachs oder eine Menge von Wachs unter 0,5 phr,
(a) 100 phr von zumindest einem Dien-Elastomerpolymer;
(b) ein Ozonschutzsystem, das im Wesentlichen besteht aus:
(i) zumindest 3,0 phr eines Polyethylenglykols; und
(ii) höchstens 3,0 phr eines Antioxidanssystems, das aus zumindest einem Antioxidans besteht, das aus der Gruppe ausgewählt ist, die aus Phenylendiamin und seinen Derivaten, Diphenylamin und seinen Derivaten, Dihydrochinolin und seinen Derivaten, Phenol und seinen Derivaten, Benzimidazol und seinen Derivaten, Hydrochinon und seinen Derivaten und Kombinationen davon besteht,
und wobei das zumindest eine äußere Strukturelement eine Seitenwand ist.

2. Reifen nach Anspruch 1, wobei die Elastomerzusammensetzung eine Menge von 3,5 phr bis 6,5 phr des Polyethylenglykols umfasst.

3. Reifen nach einem der vorhergehenden Ansprüche, wobei das Polyethylenglykol ein durchschnittliches Molekulargewicht von 1000 bis 4000 aufweist.

4. Reifen nach Anspruch 3, wobei das Polyethylenglykol ein durchschnittliches Molekulargewicht von 1000 bis 2500 aufweist.

5. Reifen nach einem der vorhergehenden Ansprüche, wobei das Antioxidanssystem aus zumindest einem ersten Antioxidans, das aus der Gruppe ausgewählt ist, die aus Phenylendiamin und seinen Derivaten besteht, und zumindest einem zweiten Antioxidans besteht, das aus der Gruppe ausgewählt ist, die aus Diphenylamin und seinen Derivaten, Dihydrochinolin und seinen Derivaten, Phenol und seinen Derivaten, Benzimidazol und seinen Derivaten und Hydrochinon und seinen Derivaten besteht.

6. Reifen nach Anspruch 5, wobei die Menge des zweiten Antioxidans höchstens 1,0 phr beträgt.

7. Reifen nach einem der vorhergehenden Ansprüche, wobei die Elastomerzusammensetzung eine Menge von 0,5 bis 2,5 phr des Antioxidanssystems umfasst.

8. Reifen nach einem der vorhergehenden Ansprüche, wobei das Phenylendiaminderivat aus der Gruppe ausgewählt ist, die aus N-(1,3-dimethylbutyl)-N'-phenyl-p-phenylendiamin (6PPD) und N,N'-ditolyl-p-phenylendiamin (DTPD) besteht.

9. Reifen nach einem der vorhergehenden Ansprüche, wobei das Dihydrochinolinderivat 2,2,4-trimethyl-1,2-dihydrochinolin, polymerisiert (TMQ) ist.

10. Reifen nach einem der vorhergehenden Ansprüche, wobei das Phenolderivat 2,6-di-t-butyl-hydroxytoluen (BHT) ist.

11. Reifen nach einem der vorhergehenden Ansprüche, wobei die Elastomerzusammensetzung (a₁) zumindest einen Polyisoprenkautschuk in einer Menge über oder gleich 20 phr und (a₂) zumindest ein Dien-Elastomerpolymer, das nicht der Polyisoprenkautschuk (a₁) ist, in einer Menge unter oder gleich 80 phr umfasst.

12. Reifen nach einem der vorhergehenden Ansprüche, wobei der zumindest eine Polyisoprenkautschuk (a₁) aus der Gruppe ausgewählt ist, die aus natürlichem und synthetischem Polyisoprenkautschuk besteht.

13. Reifen nach Anspruch 12, wobei der zumindest eine Polyisoprenkautschuk (a₁) aus der Gruppe ausgewählt ist, die aus natürlichen cis-1,4-Polyisoprenkautschuken und Mischungen davon besteht.

14. Reifen nach einem der vorhergehenden Ansprüche, wobei das zumindest eine Dien-Elastomerpolymer (a₂) aus der Gruppe ausgewählt ist, die aus Polybutadien, optional halogenierten Isopren/Isobuten-Copolymeren, 1,3-Butadien-/Acrylnitril-Copolymeren, Styrol-/1,3-Butadien-Copolymeren, Styrol-/Isopren-/1,3-Butadien-Copolymeren, Styrol-/1,3-Butadien-/Acrylnitril-Copolymeren und Mischungen davon besteht.

15. Reifen nach Anspruch 14, wobei das zumindest eine Dien-Elastomerpolymer (a₂) aus der Gruppe ausgewählt ist, die aus Polybutadienen mit 1,4-cis-Gehalt über 90% und Vinylgehalt unter 5% und Mischungen davon besteht.

## Revendications

1. Pneu pour roues de véhicule comprenant au moins un élément structurel externe qui comporte un matériau élastomère réticulé obtenu par réticulation d'une composition élastomère réticulable, où ladite composition élastomère réticulable est exempte de cire ou comprend : une quantité de cire inférieure à 0,5 phr,
(a) 100 phr d'au moins un polymère élastomère de diène ;
(b) un système de protection vis-à-vis de l'ozone essentiellement constitué :
(i) d'au moins 3,0 phr d'un polyéthylène glycol ; et
(ii) d'au plus 3,0 phr d'un système antioxydant qui est constitué d'au moins un antioxydant choisi dans le groupe constitué de phénylènediamine et de ses dérivés, de diphénylamine et de ses dérivés, de dihydroquinoléine et de ses dérivés, de phénol et de ses dérivés, de benzimidazole et de ses dérivés, d'hydroquinone et de ses dérivés, et de combinaisons de ceux-ci,
et où ledit au moins un élément structurel externe est une paroi latérale.

2. Pneu selon la revendication 1, dans lequel ladite composition élastomère comprend une quantité allant de 3,5 phr à 6,5 phr dudit polyéthylène glycol.

3. Pneu selon l'une quelconque des revendications précédentes, dans lequel ledit polyéthylène glycol a un poids moléculaire moyen allant de 1000 à 4000.

4. Pneu selon la revendication 3, dans lequel ledit polyéthylène glycol a un poids moléculaire moyen allant de 1000 à 2500.

5. Pneu selon l'une quelconque des revendications précédentes, dans lequel ledit système antioxydant est constitué d'au moins un premier antioxydant choisi dans le groupe constitué de phénylènediamine et de ses dérivés et d'au moins un deuxième antioxydant choisi dans le groupe constitué de diphénylamine et de ses dérivés, de dihydroquinoléine et de ses dérivés, de phénol et de ses dérivés, de benzimidazole et de ses dérivés, et d'hydroquinone et de ses dérivés.

6. Pneu selon la revendication 5, dans lequel la quantité dudit deuxième antioxydant est d'au plus 1,0 phr.

7. Pneu selon l'une quelconque des revendications précédentes, dans lequel ladite composition élastomère comprend une quantité allant de 0,5 à 2,5 phr dudit système antioxydant.

8. Pneu selon l'une quelconque des revendications précédentes, dans lequel ledit dérivé de phénylènediamine est choisi dans le groupe constitué de N-(1,3-diméthylbutyl)-N'-phényl-p-phénylènediamine (6PPD) et de N, N'-ditolyl-p-phénylènediamine (DTPD).

9. Pneu selon l'une quelconque des revendications précédentes, dans lequel ledit dérivé de dihydroquinoléine est la 2,2,4-triméthyl-1,2-dihydroquinoléine polymérisée (TMQ).

10. Pneu selon l'une quelconque des revendications précédentes, dans lequel ledit dérivé de phénol est le 2,6-di-tert-butyl-hydroxytoluène (BHT).

11. Pneu selon l'une quelconque des revendications précédentes, dans lequel ladite composition élastomère comprend (a₁) au moins un caoutchouc de polyisoprène en une quantité supérieure ou égale à 20 phr, et (a₂) au moins un polymère élastomère de diène autre que le caoutchouc de polyisoprène (a₁) en une quantité inférieure ou égale à 80 phr.

12. Pneu selon l'une quelconque des revendications précédentes, dans lequel ledit au moins un caoutchouc de polyisoprène (a₁) est choisi dans le groupe constitué de caoutchouc de polyisoprène naturel et de caoutchouc de polyisoprène synthétique.

13. Pneu selon la revendication 12, dans lequel ledit au moins un caoutchouc de polyisoprène (a₁) est choisi dans le groupe constitué de caoutchoucs naturels de cis-1,4-polyisoprène et de mélanges de ceux-ci.

14. Pneu selon l'une quelconque des revendications précédentes, dans lequel ledit au moins un polymère élastomère de diène (a₂) est choisi dans le groupe constitué de polybutadiène, de copolymères d'isoprène/isobutène, copolymères de 1,3-butadiène/acrylonitrile, copolymères de styrène/1,3-butadiène, copolymères de styrène/isoprène/1,3-butadiène, copolymères de styrène/1,3-butadiène/acrylonitrile éventuellement halogénés, et de mélanges de ceux-ci.

15. Pneu selon la revendication 14, dans lequel ledit au moins un polymère élastomère de diène (a₂) est choisi dans le groupe constitué de polybutadiènes avec une teneur en 1,4-cis supérieure à 90% et une teneur en vinyle inférieure à 5% et de mélanges de ceux-ci.
